# EUROPEAN PATENT APPLICATION

(11) **EP 3 670 903 A1**
(43) Date of publication of application: **24.06.2020**
(21) Application number: 19218895.1
(22) Date of filing: 20.12.2019
(51) Int. Cl.: F03G 7/06, C22F 1/00

(54) **IMPROVEMENTS TO WIRE FORMING OF SHAPE-MEMORY ALLOYS (SMAS) OR NEGATIVE THERMAL EXPANSION (NTE) MATERIALS FOR USE IN AN ENERGY RECOVERY SYSTEM**

(30) Priority: 20.12.2018 GB 201820901
(71) Applicant: Exergyn Ltd., Dublin 11 (IE)
(72) Inventor: Warren, Keith, Glasnevin, Dublin 11 (IE); Dwyer, Neil, Glasnevin, Dublin 11 (IE)
(74) Representative: Purdylucey Intellectual Property

(57) **Abstract**

The present invention relates to a system and method for or forming an elongated length of SMA or NTE material wire for use in an engine core, said system comprising a heat source adapted to cooperate with a base support; a wire holder support having a cavity to define a mould; said heat source is configured to receive the wire holder support to engage the base support; the wire holder support holds part of the SMA or NTE material wire in the cavity such that on heating the part of the SMA or NTE material wire causes the SMA or NTE material wire shape to change to match the shape of the cavity mould; and a cooling module configured to cool the wire holder support and the SMA or NTE material wire shape.

## Description

### Field

The present application relates to the field of energy recovery and in particular to the use of Shape-Memory Alloys (SMAs) or Negative Thermal Expansion (NTE) materials for energy recovery.

### Background

Low grade heat, which is typically considered less than 100 degrees, represents a significant waste energy stream in industrial processes, power generation and transport applications. Recovery and re-use of such waste streams is desirable. An example of a technology which has been proposed for this purpose is a Thermoelectric Generator (TEG). Unfortunately, TEGs are relatively expensive. Another largely experimental approach that has been proposed to recover such energy employs Shape-Memory Alloys.

A Shape-Memory Alloy (SMA) is an alloy that "remembers" its original, cold-forged shape which, once deformed, returns to its pre-deformed shape upon heating. This material is a lightweight, solid-state alternative to conventional actuators such as hydraulic, pneumatic, and motor-based systems.

The three main types of Shape-Memory Alloys are the copper-zinc-aluminium-nickel, copper-aluminium-nickel, and nickel-titanium (NiTi) alloys but SMAs can also be created, for example, by alloying zinc, copper, gold and iron. The list is non-exhaustive.

The memory of such materials has been employed or proposed since the early 1970s for use in heat recovery processes and in particular by constructing SMA engines which recover energy from heat as motion. Recent publications relating to energy recovery devices include PCT Patent Publication number WO2013/087490, WO2015/181388 and GB2533336, assigned to the assignee of the present invention. The energy recovery device consists of an engine core having a plurality of elongated wires arranged in a bundle type configuration or closely packed together. It is desirable to translate the contraction of the SMA or NTE wire material into a mechanical force in an efficient manner. It is not a trivial task and generally is complicated and involves significant energy losses. Moreover it is problematic to make these wires or rods accurately and perform under mechanical stress for a large number of cycles. Another problem to be addressed during the manufacture of the SMA or NTE wire material is how to prevent permanent wire deformities/damage during the process of forming the wires into a desired shape.

It is therefore an object to provide a system and method for making wires or rod like members for use in an energy recovery device.

### Summary

According to the invention there is provided, as set out in the appended claims, a system for forming an elongated length of Shape Memory Alloys (SMAs) or Negative Thermal Expansion (NTE) material wire, said system comprising:
a heat source module coupled to, or in communication with, a base support;
a wire holder support having a cavity to define a mould;
said heat source is configured to receive the wire holder support to engage the base support;
the wire holder support holds part of the SMA or NTE material wire in the cavity such that on heating the part of the SMA or NTE material wire causes the SMA or NTE material wire shape to change to match the shape of the cavity mould; and
a cooling module configured to cool the wire holder support and the SMA or NTE material wire shape.

In one embodiment the cooling module is configured to quench the wire holder support with a fluid.

In one embodiment the fluid is set to a temperature to remove thermal energy such that the energy remaining in the wire holder support is less than before the quenching step.

In one embodiment a heater is configured to reheat the wire and the wire holder support to bring the SMA and or NTE into an austenitic phase to allow safe removal of the wire holder support from the wire.

In one embodiment the wire holder supports are quenched with a fluid to remove thermal energy so as that the energy remain in the wire holders is less than before the quenching step.

In one embodiment the wire and its wire holders are then further heated by an air heater or heating element to bring the SMA or NTE into an austenitic state required for safe removal of said wire holders.

In one embodiment the system is configured to receive a force or pressure and applied to the SMA or NTE material wire in a direction towards the base support.

In one embodiment the heat source is adapted to heat the SMA or NTE material wire to a temperature when the wire becomes malleable.

In one embodiment the temperature is approximately 650 degrees Celsius or greater.

In one embodiment as the heated SMA or NTE material wire end becomes malleable the system is configured to apply a force that urges more of the wire into the cavity or insert until the space in the insert is filled with SMA material.

In one embodiment the cavity mould is dimensioned such that a desired shape of the SMA or NTE material wire is obtained.

In one embodiment the force is applied manually.

In one embodiment comprising a controlled actuator configured to apply a controlled pressure or force.

In one embodiment the heat source is dimensioned to receive a plurality of wire holder supports.

In one embodiment the wire holder supports are arranged in series such that when a single wire holder support engages the base support the other wire holder supports are preheated.

In one embodiment a feed mechanism is provided to automatically feed the wire holder supports against the base support.

In a further embodiment there is provided method of forming an elongated length of SMA or NTE material wire for forming an elongated length of Shape Memory Alloys (SMAs) or Negative Thermal Expansion (NTE) material wire, said method comprising the steps of:
providing a heat source to cooperate with a base support;
defining a mould in the wire holder support with a cavity;
configuring said heat source to receive the wire holder support to engage the base support;
holding part of the SMA or NTE material wire in the cavity such that on heating the part of the SMA or NTE material wire causes the SMA or NTE material wire shape to change to match the shape of the cavity mould; and
cooling the wire holder support and the SMA or NTE material wire shape.

In one embodiment there is provided the step of cooling the wire holder support with a fluid.

In one embodiment the fluid is set to a temperature to remove thermal energy such that the energy remaining in the wire holder support is less than before the cooling step.

In one embodiment there is provided the step of heating the wire and the wire holder support to bring the SMA and or NTE into an austenitic phase to allow safe removal of the wire holder support from the wire.

### Brief Description of the Drawings

The invention will be more clearly understood from the following description of an embodiment thereof, given by way of example only, with reference to the accompanying drawings, in which:-
Figure 1a illustrates a plan and elevation view of a system for forming an elongated length of SMA or NTE material wire;
Figure 1b, 1c and 1d illustrates the stages of forming an elongated length of SMA or NTE material wire using the system of Figure 1a Figure 2 illustrates a method of preloading the wire holders;
Figure 3 illustrates an alternative method of preloading the wire holders according to another embodiment of the invention
Figure 4 illustrates a system for quenching a wire holder and a SMA or NTE using a fluid to reduce the thermal energy in both metals;
Figure 5 illustrates a system to reheat the wire and the wire holder to bring the SMA and or NTE into an austenitic phase to allow safe removal of the wire holder from the wire; and
Figure 6 illustrates another embodiment of the invention showing a heated clamp mechanism.

### Detailed Description of the Drawings

The invention relates to the making of wires for use in a heat recovery system which can use either Shape Memory Alloys (SMAs) or other Negative Thermal Expansion materials (NTE) to generate power from low grade heat. The invention also relates to the making of Shape Memory Alloys (SMAs) or other Negative Thermal Expansion materials (NTE) wires for use in a cooling or refrigeration system.

Such an energy recovery device is described in PCT Patent Publication number WO2013/087490, assigned to the assignee of the present invention, and is incorporated fully herein by reference.

For such an application, the contraction of such material on exposure to a heat source is captured and converted to usable mechanical work. A useful material for the working element of such an engine has been proven to be Nickel-Titanium alloy (NiTi). This alloy is a well-known Shape-Memory Alloy and has numerous uses across different industries. It will be appreciated that any suitable SMA or NTE material can be used in the context of the present invention.

Force is generated through the contraction and expansion of this alloy (presented as a plurality of wires) within the working core, via a piston and transmission mechanism. An important aspect of the system is the ability to secure the NiTi elements at both ends such that a reliable assembly is created, enabling high-force, low displacement work to be performed for a maximum number of working cycles. Accordingly, depending on the requirements of a particular configuration and the mass of SMA material needed a plurality of SMA wires may be employed together, spaced substanitally parralell to each other, to form a single core.

In such a single engine core a number of rods/wires are held together in a bundle. An example of such a core is described in WO2016/092118, assigned to Exergyn Limited, and fully incorporated herein by reference. A key aspect of this design is that the rods/wires are manufactured such a way that a cavity or space will be left between them when organised into this bundle arrangement. This is necessary for allowing fluid/gas to penetrate the bundle and therefore achieve uniform heat transfer so that all the wires activate together as substantially the same time. The cavity or space mentioned previously is achieved by creating regions at the ends of the rods/wire that have a larger diameter than the main body.

According to a first embodiment of the invention a system and method is provided to make a wire for use in an energy recovery system as hereinbefore described and with reference to WO2013/087490 and WO2016/092118.

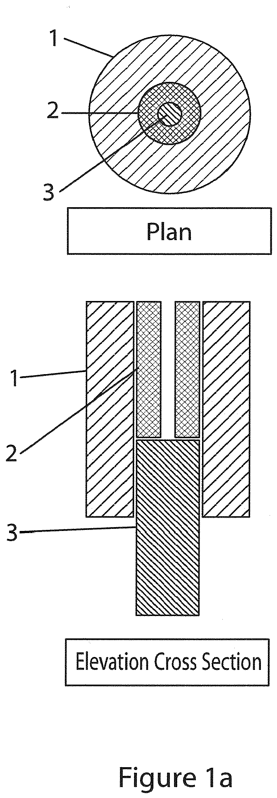

Figure 1a illustrates a system and method of forming this region and types of wires using a hot forming technique. This process can be performed on single or multiple samples at once. As can be seen the system comprises a heat source 1, a forming insert 2 and an insert holder/support 3.

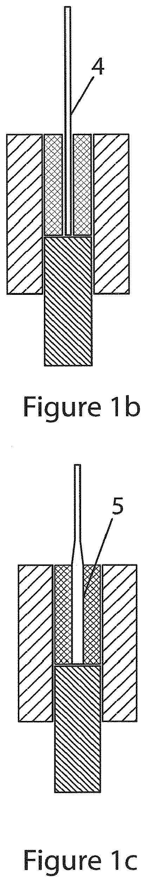

The process begins by placing the insert 2 into/onto the insert holder 3 as shown in Figure 1a. The heat source then raises the temperature of the insert beyond 650°C or other suitable temperature. The insert 2 can be effectively viewed as a mould or cast. The insert 2 can be partially or fully heated externally in order to speed up the process. Once the temperature has past 650°C a rod or wire 4 of SMA material is then placed into the insert as shown in Figure 1b. The insert can have either a blind hole or can be bored through such that the rod/wire 4 will contact the insert holder 3.

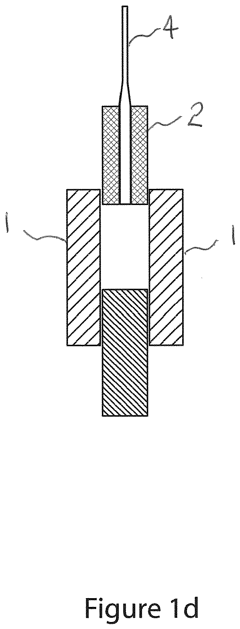

A force is then applied to the rod/wire 4 which presses it against the base (bottom of insert or insert holder depending on design used) as shown in Figure 1c. This combination of heat and pressure causes the SMA material to fill the cavity 2 in either a wave fashion (fills from bottom of insert to top due to heat transfer from base of rod/wire to top) or uniformly 5. Essentially as the heated wire end becomes malleable the force applied urges more of the wire into the insert until the space or void in the insert is filled with SMA material. The wire holder support 3 holds part of the SMA or NTE material wire in the cavity such that on heating the part of the SMA or NTE material wire causes the SMA or NTE material wire shape to change to match the shape of the cavity mould. The external pressure can be a force applied in the current process manually by an operator or it also can be a machine driven process. In effect the wires produced are in the form/shape of a rotary swage by increasing the diameter of the SMA material at each end, as shown in Figure 1d, using a hot forming method.

It will be appreciated that there is a pressure limit so that the wire is at all times deformed in a constant and controlled way so that the shape is not affected and it's always consistent. The wire has very specific properties and temperature requirements when this process is undertaken so all parameters have to be finely tuned to be able to obtain that targeted shape.

Following this the insert 2 is removed from the holder 3 with the formed rod/wire in place. The insert and rod/wire is then cooled to a temperature below 650°C and the insert is then removed. The process can then be repeated for other end of the wire. What is produced is a wire that has a narrower diameter in the middle and a larger diameter at each end. In one embodiment the diameter at the ends can be 3.5mm and the diameter near the centre is approximately 3mm. These wires can then be used to make the engine core as described in PCT patent publication numbers WO2013/087490 and WO2016/092118.

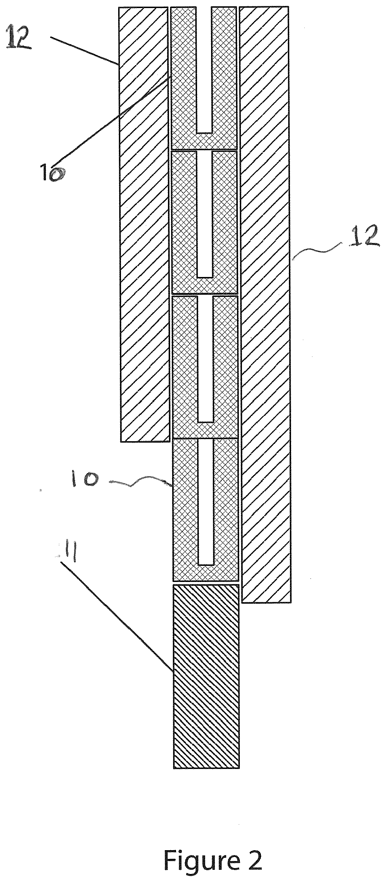

Figure 2 shows a method of pre-loading a forming insert 10. In this setup multiple inserts 10 are placed into/onto an insert holder 11. A heat source 12 extends the full or partial length of the inserts. The purpose of this is to allow the inserts to gradually increase in temperature as they move up through the heat source. This serves two functions, the first is to maintain the internal shape of the bore of the insert, as rapid heating of metals can distort or warp its shape resulting in a loss of accuracy of the formed region. The second benefit is that it reduces the waiting time of forming rod/wires as the die is at or close to temperature once it reaches the top of the heating source. The rod/wire is formed in the top insert in the same manner as discussed previously. Once the top insert has been removed a new insert is then place into the stack at the bottom by manual or automated methods, and the process then repeats.

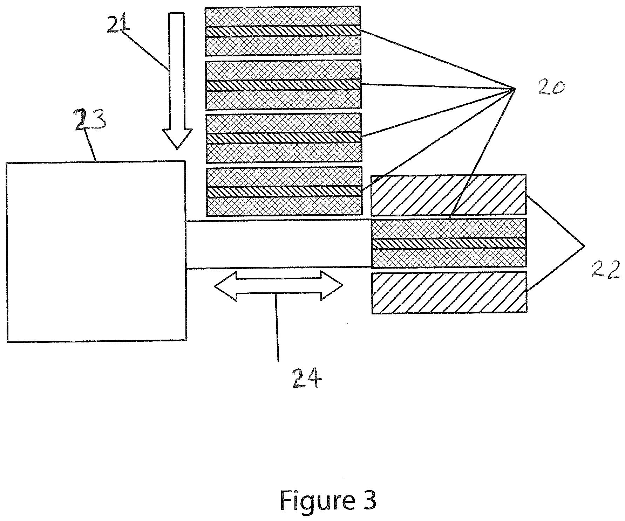

Figure 3 shows an alternative method of pre-loading a forming insert 20. In this setup multiple inserts are placed into/onto a cartridge and fed in the arrow direction 21. This direction can be in any orientation and can be gravity fed or fed by mechanical or automated methods. An actuator 23 moves the forming insert along an axis 24 into a heating region 22). The rod/wire is formed in the insert 20 in the same manner as described above with the exception that the actuator provides support for the insert during forming. Once the insert has been removed a new insert is then place into the heating region 22 by retracting the actuator. This allows a new insert to be placed into position.

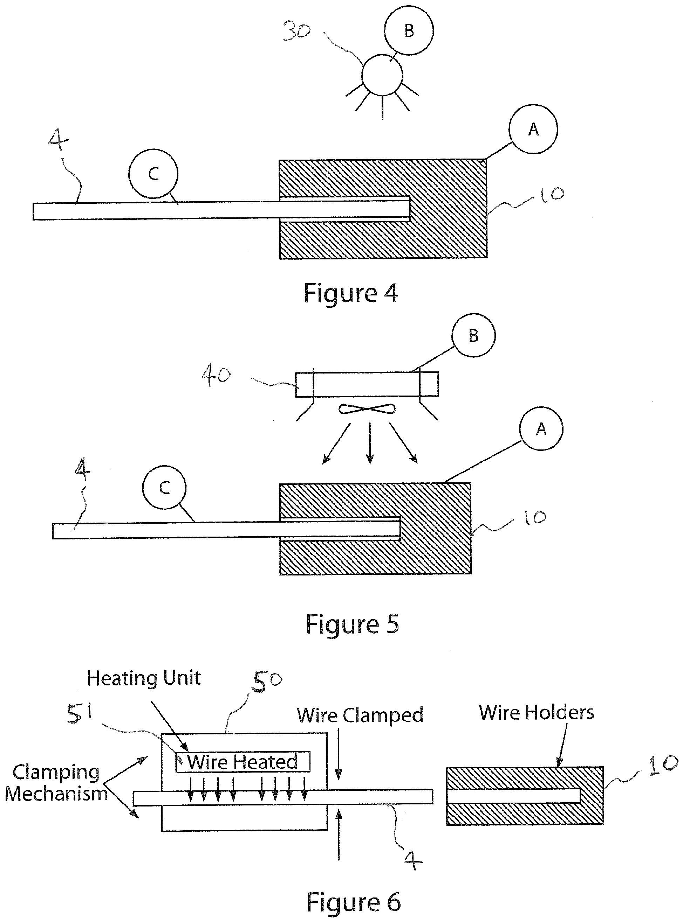

In the context of the above description after the wire has been formed into the shape of the wire holder, the wire holder, as a result of the swaging process is not affixed to the wire. Figure 4 illustrates a system for quenching the wire holder and a SMA or NTE using a fluid to reduce the thermal energy in both metals in the form of a cooling module 30. Figure 4 shows the cooling module 30 embodied as a a quenching apparatus designed to douse the wire holder 10 in or with a fluid. This fluid can be oil or water and or a non-combustible gas/fluid that has a lower temperature than the wire holder 10. This will bring the wire into a martensite phase allowing the bond between the wire holder and the wire to be separated.

Figure 5 illustrates a system to reheat the wire 4 and the wire holder 10 to bring the SMA and or NTE into an austenitic phase to allow safe removal of the wire holder 10 from the wire 4 using a heater module 40. The heater module 40 can be combined with the cooling module 30 and operate independently of each otehr. Figure 5 shows the following step of the process, the wire holders and the SMA or NTE are partially reheated to approximately 200°C to get the SMA or NTE back into an austenitic state allowing for safe removal of the wire holder and the wire under force removing any potential for permanent wire deformities/damage. In other words the invention provides for quenching and subsequent partial reheating after forming the wire 4. Without these two steps it was found that the SMA or NTE will plastically deform due to the elevated temperatures it has experienced and it is in a vulnerable metallurgic state. The cooling/quenching and/or partial reheating overcomes this problem. The steps laid out herein are deemed a requirement for the successful forming/swaging of SMA or NTE into a shape that is deemed suitable for an engine core as described in PCT patent publication numbers WO2013/087490 and WO2016/092118.

Figure 6 illustrates another embodiment of the invention showing a heated clamp mechanism 50. As described in the hot forming process, pressure is applied to the wire/rod while at elevated temperatures in order to cause its material to fill the cavity of the wire holder. However in order to achieve this the wire/rod should preferably be fixed. This could be done using a simple clamping mechanism 50 however the forces required to prevent the wire/rod from slipping can often be high enough to cause damage to the material. Increasing the length of the clamp will reduce the stress applied however this increases the space required for clamping and can increase complexity of the overall design.

One way of avoiding this is to use a heated clamping mechanism as shown in Figure 6. In this embodiment a heating unit 51 is included within the clamping mechanism 50, however this could be external if desired. As the clamp 50 contacts the wire/rod heat is transferred which causes the wire/rod material to enter a partial or fully phase change. This causes the material strength to increase and therefore become more resistant to damage when clamped.

The wire/rod 4 can be pre-heated before entering the clamping mechanism 50 in which case the heating units purpose would be to maintain or increase the temperature of the wire/rod.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A system for forming an elongated length of Shape Memory Alloys (SMAs) or Negative Thermal Expansion (NTE) material wire for use in an engine core, said system comprising:
a heat source module coupled with a base support;
a wire holder support having a cavity to define a mould;
said heat source module is configured to receive the wire holder support to engage the base support;
the wire holder support is configured to hold part of the SMA or NTE material wire in the cavity such that on heating the part of the SMA or
NTE material wire causes the SMA or NTE material wire shape to change to match the shape of the cavity mould; and
a cooling module configured to cool the wire holder support and the shaped SMA or NTE material wire.

2. The system of claim 1 wherein the cooling module is configured to quench the wire holder support with a fluid.

3. The system of claim 2 wherein the fluid is set to a temperature to remove thermal energy such that the energy remaining in the wire holder support is less than before the quenching step.

4. The system of any preceding claim comprising a heater configured to reheat the shaped SMA or NTE material wire and the wire holder support to bring the shaped SMA or NTE material into an austenitic phase to allow safe removal of the shaped SMA or NTE material from the wire holder support.

5. The system of any preceding claim wherein the system is configured to apply a force or pressure to the SMA or NTE material wire in a direction towards the base support.

6. The system of any preceding claim wherein the heat source is adapted to heat the SMA or NTE material wire to a temperature when the wire becomes malleable.

7. The system of claim 6 where in the temperature is at least 650 degrees Celsius.

8. The system of any preceding claim wherein as the heated SMA or NTE material wire end becomes malleable the system applies a force that urges more of the wire into the cavity until the space in the insert is filled with SMA or NTE material.

9. The system of any preceding claim wherein the cavity mould is dimensioned such that a desired shape of the SMA or NTE material wire is obtained.

10. The system of any preceding claim comprising a controlled actuator configured to apply a controlled pressure or force to said SMA or NTE material wire.

11. The system of any preceding claim wherein the heat source is dimensioned to receive a plurality of wire holder supports.

12. The system of claim 11 wherein the wire holder supports are arranged in series such that when a single wire holder support engages the base support the other wire holder supports are preheated.

13. The system of any preceding claim wherein a feed mechanism is provided to automatically feed the wire holder supports against the base support.

14. A method of forming an elongated length of SMA or NTE material wire for forming an elongated length of Shape Memory Alloys (SMAs) or Negative Thermal Expansion (NTE) material wire, said method comprising the steps of:
defining a mould in a wire holder support with a cavity;
heating the mould using a heat source coupled to a base support configuring said heat source to receive the wire holder support to engage the base support;
holding part of the SMA or NTE material wire in the cavity heating the part of the SMA or NTE material wire causes the SMA or NTE material wire shape to change to match the shape of the cavity mould; and
cooling the wire holder support and the shape-changed SMA or NTE material wire.
